**Europäisches Patentamt**

**European Patent Office**

**Office européen des brevets**

(11) Veröffentlichungsnummer : **0 368 139 B1**

(12) **EUROPÄISCHE PATENTSCHRIFT**

(45) Veröffentlichungstag der Patentschrift :
19.07.95 Patentblatt 95/29

(21) Anmeldenummer : **89120274.9**

(22) Anmeldetag : **02.11.89**

(51) Int. Cl.⁶ : **H04N 7/32**, H04N 7/30, H04N 7/24

(54) **Verfahren zur Codierung von Restfehlerbildern.**

(30) Priorität : **05.11.88 DE 3837590**

(43) Veröffentlichungstag der Anmeldung :
**16.05.90 Patentblatt 90/20**

(45) Bekanntmachung des Hinweises auf die
Patenterteilung :
**19.07.95 Patentblatt 95/29**

(84) Benannte Vertragsstaaten :
**DE FR GB IT NL**

(56) Entgegenhaltungen :
**EP-A- 0 239 076**

(56) Entgegenhaltungen :
**DE-A- 3 704 777**
**ICASSP 88 11 April 1988, NEW-YORK Seiten
1096 - 1099; STROBACH ET AL.:
"SPACE-VARIANT REGULAR DECOMPOSI-
TION QUADTREES IN ADAPTIVE INTER-
FRAME CODING"**

(73) Patentinhaber : **ANT Nachrichtentechnik
GmbH
Gerberstrasse 33
D-71522 Backnang (DE)**

(72) Erfinder : **Gilge, Michael, Dipl.-Ing.
Mariahilfstrasse 18
D-5100 Aachen (DE)**

## Beschreibung

Die Erfindung geht aus von einem Verfahren zur Aufbereitung eines codierten Restfehlersignals, insbesondere für die Übertragung codierter Bildsequenzen.

Aus der DE-A1-37 33 038, die erst nach dem Prioritätsdatum der vorliegenden Anmeldung veröffentlicht wurde, ist ein Verfahren für die Aufbereitung eines codierten Restfehlersignals bekannt. Das Restfehlersignal wird durch die Subtraktion eines durch Berechnung von Bewegungsvektoren und entsprechender Verschiebung von Teilbildbereichen des vorangegangenen Bildes erzeugten Schätzbildes vom aktuellen Bild gebildet und drückt die Unzulässigkeit der Beschreibung des aktuellen Bildes durch das Schätzbild aus.

Die EP-A-0 239 076 beschreibt einen Bildcoder für die Codierung von Bewegtbildern, bei welchem durch orthogonale Transformation Koeffizientenblöcke gebildet werden. Eine nachfolgende Quantisierung der transformierten Koeffizienten wird von einer Klassifizierung gesteuert, deren Steuerkriterium der Füllstand eines ausgangsseitigen Pufferspeichers ist.

Bei einem Bildcoderverfahren gemäß DE-C1-37 04 777 werden für Teilbildbereiche Verschiebungsinformationen gewonnen, mittels derer beim Übertragen ausgelassene Bildsequenzen rekonstruiert werden. Nur dort, wo diese Methode versagt, werden bildpunktabhängige Informationen, z.B. durch DCT-Transformation, aufbereitet. Die Verschiebungsinformation wird iterativ geschätzt.

Für die Codierung des Restfehlerbildes sind bis jetzt fast ausnahmslos Verfahren der "intraframe" Codierung von Grauwertbildern verwendet worden. Diese gehen meist von einer Transformation, zum Beispiel Diskrete Cosinus Transformation (DCT), aus (vgl. DE 37 04 777 C1). Dabei wird die hohe örtliche Korrelation natürlicher Grauwertbilder ausgenutzt. Durch Transformation werden die Daten in ein neues Koordinatensystem abgebildet, in dem die hier vorliegenden Koeffizienten der Transformation nur noch schwache Korrelationen aufweisen. Anders ausgedrückt: Die in einem Bildblock relativ gleichmäßig verteilte Leistung wird auf wenige Spektralkoeffizienten konzentriert. Für eine Approximation des Bildblockes genügt daher die Übertragung einiger weniger leistungstragender Koeffizienten. Die in der Literatur veröffentlichten Verfahren unterscheiden sich durch die Auswahl und die Quantisierung der zu codierenden Spektralkoeffizienten. Eine vollständige Dekorrelation kann durch eine Karhunen-Loeve Transformation (KLT) erzielt werden (Digital Image Processing, William K.Pratt, John Wiley & Sons Publication, 1978, Seiten 259-263). Allerdings ist dazu die Berechnung der Kovarianzmatrix des Bildprozesses erforderlich, woraus über eine Eigenwerttransformation die Transformationsmatrix gewonnen wird. Unter der für natürliche Bildvorlagen meist mit hinreichender Genauigkeit zutreffenden Annahme, daß der bilderzeugende Zufallsprozeß durch einen Markov-Prozeß erster Ordnung modelliert werden kann, kann gezeigt werden, daß die DCT die KLT approximiert. Dies gilt jedoch nur solange, wie der Korrelationskoeffizient in der für natürliche Bildvorlagen typischen Größenordnung von 0,95 - 0,98 liegt. Man kann zeigen, daß die DCT für schwach korrelierte Daten weniger gute Eigenschaften aufweist, welches die Eignung der DCT zur Codierung der Restfehlerbilder in Frage stellt.

Aufgabe der Erfindung ist es ausgehend vom Oberbegriff des Patentanspruchs 1 ein Varfahren anzugeben, welches eine verbesserte Datenkompression bei geringem Verarbeitungsaufwand ermöglicht. Diese Aufgabe wird durch die Schritte des Patentanspruchs 1 gelöst. Die Unteransprüche zeigen vorteilhafte Weiterbildungen dieses Verfahrens auf. Das Verfahren nach der erfindung eignet sich insbesondere zur Übertragung von Bildsequenzen über einen Kanal mit begrenzter Übertragungskapazität unter Verwendung eines hybriden Codierverfahrens.

Durch Vergleich zeitlich aufeinanderfolgender Bilder wird die Ähnlichkeit dieser Bilder dadurch ausgenutzt, daß für die Teilbildbereiche Bewegungsvektoren ermittelt werden, welche die Bewegung der Teilbildbereiche beschreiben. Durch einen Vergleich kann senderseitig festgestellt werden, ob die aufgrund der Information über die Verschiebung der Teilbildbereiche gewonnene rekonstruierte Bildsequenz mit der Originalsequenz hinreichend genau übereinstimmt. Für Teilbildbereiche des Bildes, in denen dies nicht der Fall ist, ist neben der Übertragung der Bewegungsvektoren die Übertragung von bildpunktabhängiger Information, des sogenannten Restfehlersignales, erforderlich.

Das in der Erfindung beschriebene Verfahren berücksichtigt einerseits die spezielle Struktur und Statistik des zu übertragenden Restfehlersignals. Andererseits werden Eigenschaften des menschlichen Gesichtssinnes ausgenutzt, um zu einer möglichst geringen Datenrate zur Beschreibung des Restfehlersignales zu gelangen. Dazu wird das Restfehlersignal einer adaptiven groben Quantisierung unterzogen. Die quantisierten Bildpunkte werden zu kleinen Blöcken zusammengefaßt und durch eine Strukturcodierung beschrieben. Neben der Quantisierung bewirkt die durch die Strukturcodierung erfolgte Auswahl häufig vorkommender Muster der quantisierten Bildpunkte innerhalb eines Blockes eine weitere Reduzierung der Datenrate. Schließlich wird die Signalisierung derjenigen Teilbildbereiche, auf die eine derartige Restfehlercodierung angewendet wird, durch eine hierarchische Baumstruktur vorgenommen.

Die Erfindung geht von der Erkenntnis aus, daß die statistischen Eigenschaften von Restfehlersignalen sich grundsätzlich von denen natürlicher Bildvorlagen unterscheiden, und daher auch die Codierungsmethoden, welche bei natürlichen Bildern anwendbar sind, auf die Codierung von Restfehlerbildern nicht gewinnbringend übertragbar sind. Im folgenden wird daher zunächst die Statistik von Restfehlerbildern analysiert und dann gezeigt, daß klassische Methoden der Bildcodierung zur Codierung von Restfehlerbildern wenig erfolgversprechend sind, um schließlich das der Erfindung zugrundeliegende Verfahren anhand der Zeichnungen zu erläutern.

Es zeigen:

Bild 1 die Autokorrelationsfunktion der Originalbildsequenz "Miss America" in horizontaler und vertikaler Richtung,

Bild 2 die Autokorrelationsfunktion der Sequenz der Prädiktionsfehlerbilder ebenfalls in horizontaler und vertikaler Richtung,

Bild 3 Eigenwerte der Kovarianzmatrizen für Originalbilder und für Prädiktionsfehlerbilder normiert auf den größten Eigenwert,

Bild 4 die Varianzen der DCT-Spektralkoeffizienten für Originalbilder und für Prädiktionsfehlerbilder sortiert nach dem Betrag der Varianz,

Bild 5 die übertragene Bildsignalleistung in Abhängigkeit der Anzahl übertragener DCT-Koeffizienten bei Anwendung der DCT auf Originalbilder und Prädiktionsfehlerbilder,

Bild 6 die Verteilungsdichtefunktion des Energiekompressionskoeffizienten,

Bild 7 ein Prädiktionsfehlerbild (4-fach verstärkt),

Bild 8 die Verteilungsdichtefunktion des Prädiktionsfehlerbildes,

Bild 9 die Modulationsübertragungsfunktion des visuellen Systems,

Bild 10 ein Blockschaltbild für eine Strukturcodierung,

Bild 11 die Verteilungsdichtefunktion des Prädiktionsfehlerbildes nach Klassifikation in 4 Klassen,

Bild 12 die Auftrittshäufigkeit 81 möglicher Blocktypen,

Bild 13 die Auftrittshäufigkeit der verbleibenden 31 Blocktypen,

Bild 14 ein Blockschaltbild eines Coders und

Bild 15 ein Quadtree-Maskenbild zur Codierung von Orts- und Klasseninformation.

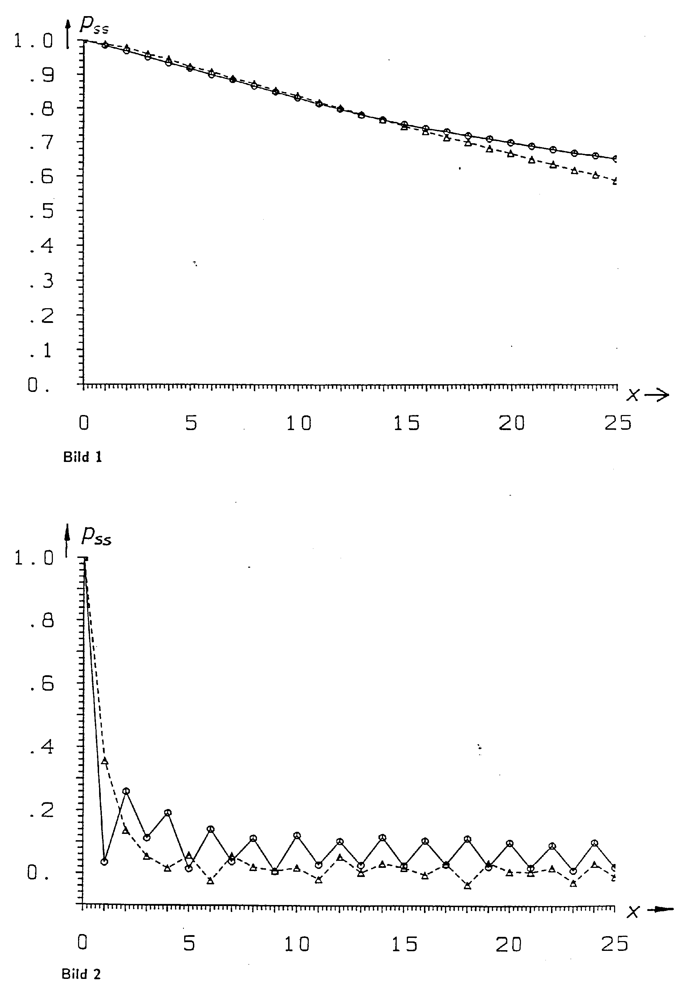

Verfahren zur Datenkompression von Bildern nutzen die starke Korrelation benachbarter Bildpunkte aus. Bild 1 zeigt die Autokorrelationsfunktion $P_{SS}$, ermittelt aus 150 Bildern der Sequenz "Miss America", für jeweils horizontale (———) und vertikale (- - -) Richtung. Aus den Abbildungen geht hervor, daß zwei benachbarte Punkte einen Korrelationskoeffizienten von 0,98 haben. Im Vergleich zum Originalbild zeigt das Bild 2 die entsprechenden Autokorrelationsfunktionen für die Restfehlerbilder, ebenfalls ermittelt aus der Sequenz "Miss America" unter Verwendung eines Bewegungskompensationsalgorithmus. Deutlich ist die nun wesentlich geringere Korrelation der Bildpunkte zu erkennen. Der Korrelationskoeffizient benachbarter Punkte beträgt 0,49.

Da der Gewinn der in der Bildcodierung verwendeten Prädiktions- und Transformationsverfahren auf einer hohen Korrelation der Bildpunkte beruht, soll im folgenden gezeigt werden, daß diese Verfahren zur Codierung des Restfehlersignals wenig geeignet sind.

Die schwache Korrelation der Bildpunkte des Restfehlerbildes läßt erwarten, daß durch Transformationscodierung der Daten keine nennenswerte Leistungskonzentration erzielt werden kann. Zur Abschätzung des Codierungsgewinns werden im folgenden verschiedene Kriterien zur Beurteilung der Effizienz von Transformationen untersucht.

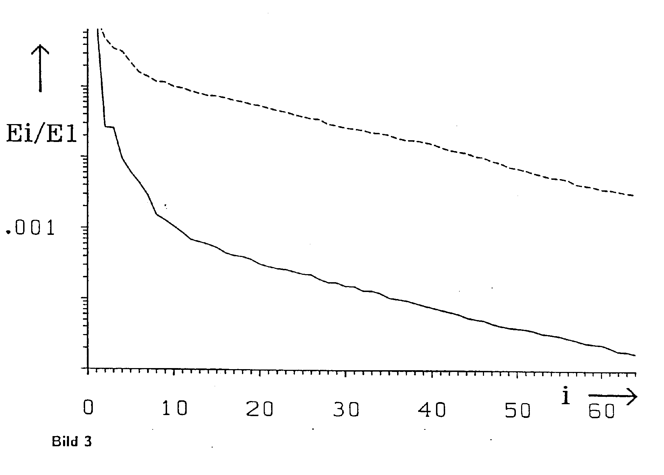

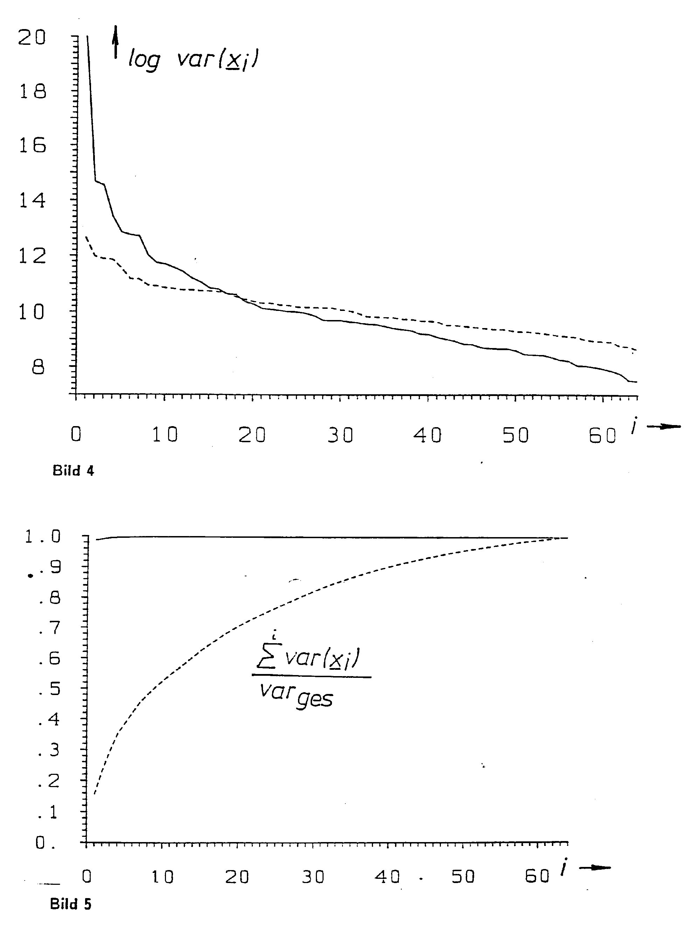

Ereignisse eines Zufallsprozesses sind genau dann unkorreliert, wenn die Kovarianzmatrix des Zufallsprozesses Diagonalform hat, also alle Kovarianzen verschwinden. Für den Sonderfall eines Gaußprozesses sind die Ereignisse sogar statistisch unabhängig. Um zu einer diagonalförmigen Kovarianzmatrix zu gelangen, kann man eine sogenannte Eigenwert-Transformation durchführen, in der Literatur wird diese Transformation "Karhunen-Loève" (Digital Image Processing s.o.) oder auch "Hotelling-Transformation" genannt. Dabei bilden die Eigenvektoren die Spalten der Transformationsmatrix. Diese KLT stellt demnach das erreichbare Optimum für eine Transformationscodierung dar. Man kann zeigen, daß die DCT für die Klasse der natürlichen Bildvorlagen, welche durch einen autoregressiven Prozess erster Ordnung modelliert werden können, die KLT mit größer werdender Blockgröße asymptotisch approximiert. Da für die KLT kein schneller Algorithmus existiert und die Transformationsmatrix relativ rechenaufwendig an die jeweilige Statistik angepaßt werden muß, spricht man bei der DCT auch von einer schnellen KLT. Durch Sortierung der Eigenvektoren in der Transformationsmatrix, entsprechend dem Betrag der zugehörigen Eigenwerte, erreicht man bei der KLT eine Leistungskonzentration auf die Spektralkoeffizienten mit kleinstem Index. Der Gewinn durch Leistungskonzentration ist dabei umso größer je größer der Unterschied im Betrag der Eigenwerte ist. In Bild 3 wird der Verlauf der Eigenwerte Ei normiert auf den größten Eigenwert E(1) für die Statistik des Restfehlerbildes/Prädiktionsfehlerbildes (- - -) und im Vergleich dazu für die Originalsequenz (———) gezeigt. Der nur langsam abklingende Verlauf im Falle des Restfehlersignals zeigt, daß durch Transformationsverfahren kein wesentlicher Gewinn zu erzielen ist. Für den Fall der DCT wird in Bild 4 der Verlauf der Varianzen log var($\underline{x}_i$) der Spektralkoeffizienten $\underline{x}_i$ verglichen, wobei eine Blockgröße 8x8 Bildpunkte zugrunde gelegt wurde. Die Originalbilder sind wieder durch ———— und die Fehlerbilder durch - - - gekennzeichnet. Für das Restfehlersignal erhält man im Vergleich zu natürlichem Bildmaterial eine relativ geringe Abnahme der Varianzen mit steigender Koeffizientenordnung i.

Die akkumulierten spektralen Varianzen in Abhängigkeit von der Anzahl der übertragenen Spektralkoeffizienten zeigt Bild 5. Für eine natürliche Bildvorlage wird die Varianz des Bildblockes schon durch Berucksichtigung weniger Koeffizienten fast vollständig repräsentiert. Im Falle des Restfehlersignals sind für das Erreichen der gleichen Wechselleistung wesentlich mehr Koeffizienten erforderlich.

Ein weiteres Effizienzmaß für die Transformation kann mit Hilfe der Entropie gewonnen werden. Dazu wird die Entropie erster Ordnung sowohl im Bildbereich, als auch im Spektralbereich berechnet. Im Spektralbereich wird für den Fall, daß alle Spektralkoeffizienten gleiche Werte annehmen die Entropie maximal. Dies kann als vollständiges Fehlen der Leistungskonzentrationseigenschaften angesehen werden. Andererseits wird die Entropie im Spektralbereich für die Konzentration der Leistung auf einen Koeffizienten minimal. Im Bildbereich erhält man für die Entropie erster Ordnung

$$H(x) = - \sum_{k=1-L}^{L} p_k \, log_2 p_k,$$

mit $p_k$ als der Wahrscheinlichkeit, daß die Zufallsvariable x den Wert $r_k$ annimmt. Der Vorrat an Zeichen ergibt sich aus der Quantisierung der Bildpunkte mit 8 bit in diesem Fall zu $L = 2^8$. Der Wert von H(x) ist ein Maß für den mittleren Informationsgehalt eines Bildpunktes des Restfehlerbildes. An Hand von 50 Restfehlerbildern aus der Testsequenz "Miss America" wurde der Wert für die Entropie bestimmt: H(x) = 3,82 bit/pixel.

Zum Vergleich wird nun eine blockweise diskrete Cosinus Transformation mit einer Blockgröße von 8x8 Bildpunkten auf das Restfehlerbild angewendet. Aus den Wahrscheinlichkeiten für das Auftreten der Amplituden der Spektralkoeffizienten ermittelt man nun die Entropie im Spektralbereich H(u). Geht man von einer optimalen und für jeden Spektralkoeffizienten getrennten Codierung aus, erhalt man die Entropie durch Mittelung der Einzelentropien für jeden Koeffizienten:

$$H'(u) = -\frac{1}{N^2} \sum_{i=0}^{N-1} \sum_{j=0}^{n-1} \sum_{k=1-M}^{M} p_k^{(i,j)} \, log_2 \, p_k^{(i,j)}$$

Der Spektralkoeffizien u(i,j) nimmt mit der Wahrscheinlichkeit $p_k^{(ij)}$ einen Wert aus dem möglichen Wertebereich von [(1-M)$\leq$u$\leq$M] an. Für die oben erwähnte Sequenz wurden gemessen: H(u) = 3,59 bit/pixel bzw. H'(u) = 3,45 bit/pixel. Diese Ergebnisse widersprechen der allgemeinen Annahme, daß durch Transformationscodierung des Restfehlerbildes eine Datenkompression erreicht werden kann. Vielmehr wird die Entropie durch Transformation oft vergrößert. Auch die getrennte Codierung jedes einzelnen Spektralkoeffizienten erreicht nur eine geringe Verbesserung.

Die geraden Momente höherer Ordnung können als weiterer Indikator für die Leistungskonzentration verwendet werden.

Die Motivation für ein derartiges Effizienz-Kriterium ergibt sich aus der Leistungsvarianz der verwendeten Transformationen. Die Momente zweiter Ordnung sind also im Original- und Spektralbereich identisch. Für die Transformationsmatrix T erhält man für den Datenvektor x den Vektor der Spektralkoeffizienten y (Zur Vereinfachung der Darstellung wird nur der eindimensionale Fall abgeleitet, die Erweiterung auf zwei Dimensionen folgt direkt). Wegen der Eigenschaft der Leistungsinvarianz gilt:

$$y = T \cdot x$$
$$y^T \cdot y = x^T T T^T x = x^T x$$

oder in Momentendarstellung

$$\sum_{l=1}^{N} y^2(l) = \sum_{l=1}^{N} x^2(l)$$

Dies ist für die Momente höherer Ordnung nicht mehr der Fall:

$$\sum_{l=1}^{N} y^k(l) \;\neq\; \sum_{l=1}^{N} x^k(l)$$

für $k > 2$ und $k$ gerade.

Man kann erwarten, daß bei vorhandener Leistungskonzentration die Momente höherer Ordnung im Spektralbereich wesentlich größere Werte annehmen als die entsprechenden Momente im Originalbereich. Aus dem Verhältnis der Momente höherer Ordnung im Original und im Spektralbereich erhält man also ein Maß für den Grad der erreichten Leistungskonzentration. Dieser Leistungskonzentrationskoeffizient $\rho_k$ in Abhangigkeit von der Ordnung der Momente k ist folgendermaßen definiert:

$$\rho_k = \rho_k(\,x\,,\,T\,) = \frac{\displaystyle\sum_{l=1}^{N} y^k(l)}{\displaystyle\sum_{l=1}^{N} x^k(l)}$$

für $k > 2$ und $k$ gerade.

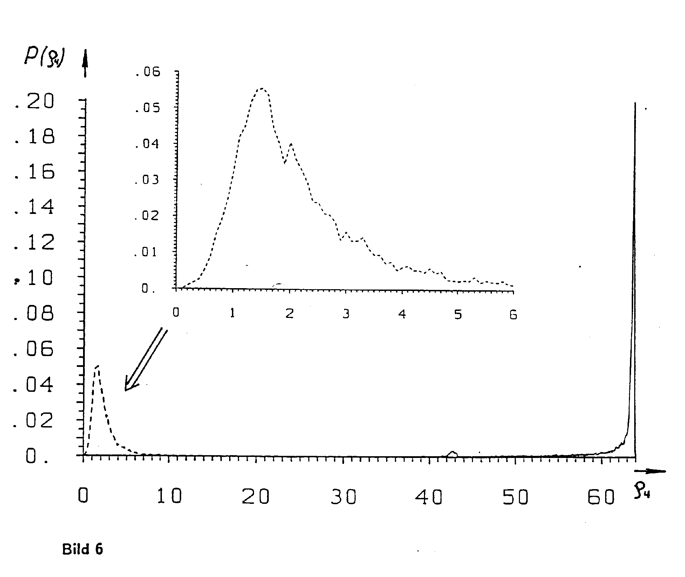

Bild 6 zeigt die Verteilung - Verteilungsdichtefunktion P - dieses Kriteriums $\rho_k$ für das Moment vierter Ordnung k = 4 für die Testsequenz "Miss America" (Originalbild ———— , Fehlerbild - - -). Für den Bereich $\rho_k > 1$ kann eine Transformation vorteilhaft eingesetzt werden. Die Abbildung zeigt jedoch eine Häufung um den Wert $\rho_4 = 2$. Für natürliche Bildvorlagen wird typischerweise ein Wert von $\rho_4 \approx 63$ erreicht. Daraus kann man ersehen, daß die Transformation in vielen Fällen eine Expansion der Daten zufolge hat und selbst im Falle der Kompression nur mäßige Leistungskonzentratoin erreicht wird.

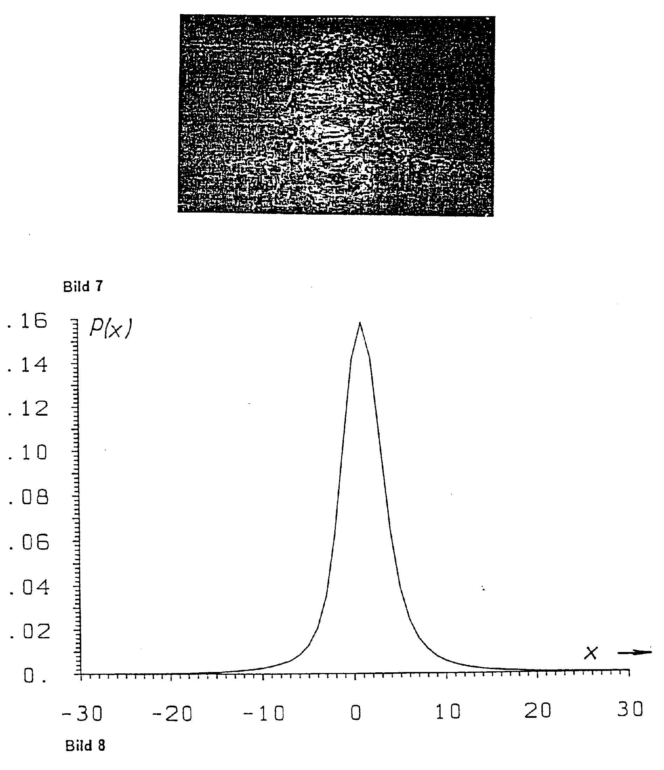

Auf der Grundlage der oben genannten Ergebnisse wird im folgenden erfindungsgemäß eine Strukturcodierung eingeführt, die eine effiziente Codierung des Restfehlerbildes ermöglicht. Zur Veranschaulichung ist in Bild 7 ein typisches Restfehlerbild abgebildet. Als Approximation der Verteilungsdichtefunktion ist in Bild 8 das aus 50 Restfehlerbildern gemessene Amplitudenhistogramm (Verteilungsdichtefunktion p(x) des Prädiktionsfehlerbildes) dargestellt. Zur Verwendung der Codierung in einen Bewegtbildcoder mit niedriger Datenrate, wird eine Codierung des Restfehlerbildes mit $\approx 0{,}8$ bit/Bildpunkt angestrebt.

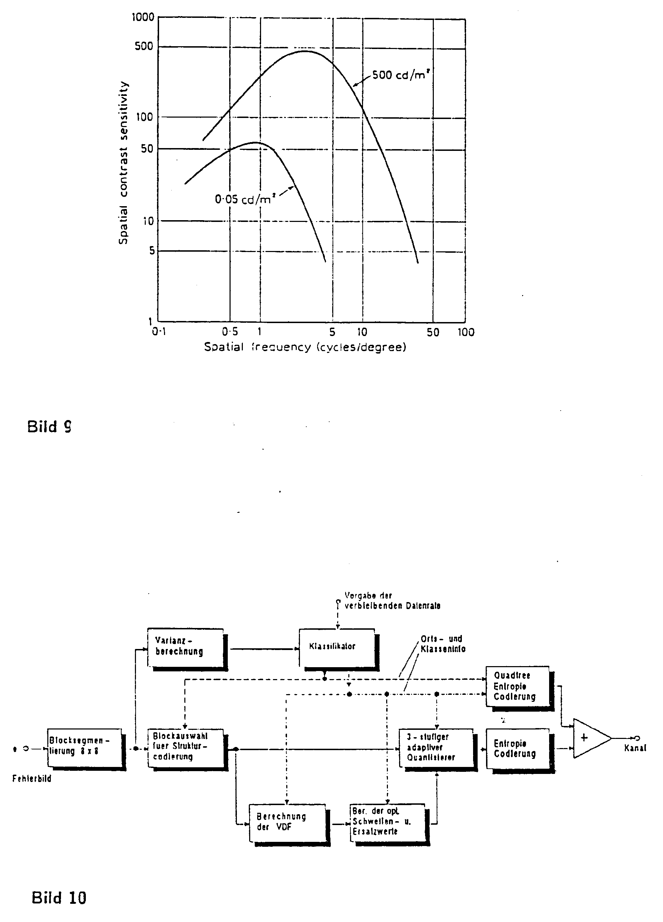

Dieser Wert soll bei subjektiv guter Qualität erreicht werden. Dies ist deshalb besonders wichtig, da die codierten Bildbereiche zur Prädiktion des darauffolgenden Frames herangezogen werden. Eine Codierung mit geringer Qualität würde verhindern, daß das im Empfänger rekonstruierte Bild bei geringer werdender Bewegung das Originalbild sukzessive approximiert. Darüber hinaus kann die Wahrnehmbarkeit von Rekonstruktionsfehlern durch Bewegungseffekte erhöht sein. Die Helligkeitswerte der Bildpunkte werden unabhängig voneinander und linear in 256 Stufen quantisiert. Diese Auflösung ist nötig, damit im Bereich höchster Kontrastempfindlichkeit des menschlichen Sehapparates keine Quantisierungsfehler wahrnehmbar werden. Diese Kontrastempfindlichkeit hängt aber sehr stark von der Ortsfrequenz der beobachteten Struktur ab, Bild 9. Diese sogenannte Modulationsübertragungsfunktion zeigt ein deutliches Maximum der Empfindlichkeit für Ortsfrequenzen um 1 bis 5 Zyklen pro Grad. Der Verlauf der Modulationsübertragungsfunktion ist stark von der Grundhelligkeit abhängig. In allen Fällen ist jedoch ein starker Rückgang der Empfindlichkeit für höhere Ortsfrequenzen zu beobachten. Daher ist die hohe Amplitudenauflösung mit 8 bit/Bildpunkt im Falle des Restfehlersignals, welches als Hochpaßkomponente mit hinreichender Genauigkeit modelliert werden kann, nicht erforderlich. Die lineare Quantisierung des Originalbildes ist wegen der annähernden Gleichverteilung der Amplituden gerechtfertigt. Diese Voraussetzung trifft jedoch im Falle des vorliegenden Bildmaterials nicht zu, wie Bild 8 zeigt. Die Form der Verteilungsdichtefunktion kann bei linearer Quantisierung durch Entropiecodierung der Ersatzwerte ausgenutzt werden. Dadurch wird die Verteilungsredundanz entfernt; allerdings liegt die so erzielte Datenrate weit oberhalb der zu erreichenden Zieldatenrate.

Für das Qualitätskriterium "mittelbarer quadratischer Fehler" existiert ein Algorithmus zur Quantisierung mit minimalem Fehler. Die Berechnung der Ersatzwerte und Stufen erfolgt jedoch iterativ und ist mit beträchtlichem Aufwand verbunden. Die durchgeführten Untersuchungen an Hochpaßkomponenten natürlicher Bildvorlagen haben zum Ergebnis, daß eine dreiwertige Quantisierung dann ausreichend ist, wenn die Quantisiererkennlinien adaptiv in mindestens vier Klassen umgeschaltet werden. Die mögliche Modellierung des Restfehlerbildes durch ein Hochpaßbild und die daraufhin durchgeführten Untersuchungen mit dreiwertiger Quantisierung bestätigen die Übertragbarkeit der Ergebnisse. Die Verwendung eines Nullersatzwertes bietet sich wegen der spitzen Form der Verteilungsdichtefunktion an. Die Bestimmung der positiven und negativen Ersatzwerte für jede der vier Quantisiererkennlinien erfolgt nach folgendem Verfahren (siehe Bild 10):

* Bestimmung von 3 Klassengrenzen an Hand der Fehlervarianz; die Unterteilung wird so vorgenommen, daß in jede Klasse ungefähr die gleiche Anzahl von Blockrealisationen fällt.
* Approximation der Verteilungsdichtefunktionen p(x) für jede Klasse durch Berechnung des Amplitudenhistogramms getrennt nach Klassen.
* Berechnung des Quantisierer-Ersatzwertes, der den mittleren quadratischen Quantisierungsfehler minimiert. Es wird eine symmetrische Form der Verteilungsdichtefunktion vorausgesetzt. Die Leistung des Fehlers $N_q$ berechnet sich aus der Amplitude des Fehlersignals x und bei bekannter Verteilungsdichtefunktion p(x) für die Schwelle u und den Ersatzwert v zu:

$$N_q = \frac{1}{n} \cdot \left( \sum_{x=0}^{u-1} p(x) \cdot x^2 + \sum_{x=u}^{x_{max}} p(x) \cdot (x-v)^2 \right)$$

Die Bedingung für minimalen Quantisierungsfehler lautet:

$$\frac{\partial N_q}{\partial v} \overset{!}{=} 0$$

Daraus ergibt sich der optimale Ersatzwert $v_{opt}$ zu:

$$v_{opt} = \frac{\sum\limits_{x=u}^{255} p(x) \cdot x}{\sum\limits_{x=u}^{255} p(x)}$$

Für die Berechnung wird zunächst eine Schwelle u = 1 angesetzt.

* Bestimmung der optimalen Schwelle $u_{opt}$, so daß der Quantisierungsfehler minimal wird. Dazu wird ausgehend von der Schwelle u = 1 diese solange vergrößert, bis die Leistung des resultierenden Fehlersignals ihr Minimum erreicht.

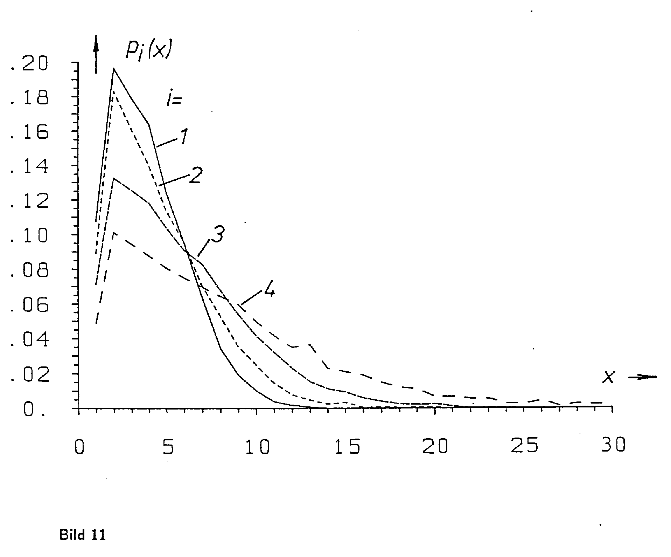

Die Berechnung der Quantisiererersatzwerte und Schwellen wird für jedes Bild erneut vorgenommen, so daß eine optimale Adaption an die Bildstatistik erzielt wird. Für die Verwendung der Strukturcodierung in einem Bewegtbildcoder ist diese Tatsache besonders wichtig: Bei großen Bildveränderungen kann der Bildaufbau durch Verwendung großer Ersatzwerte rasch erfolgen. Bei abklingender Bewegung werden kleinere Ersatzwerte berechnet, was die asymptotische Annäherung an die Originalbildqualität garantiert. Die den vier Klassen entsprechenden Verteilungsdichtefunktionen sind am Beispiel eines Bildes in Bild 11 dargestellt. In der Tabelle sind die Daten zusammengestellt:

| Fehlerbildvarianz | Klasse | Grenzen | Ersatzwerte |
|---|---|---|---|
| $0 \leq \sigma^2 < 764$ | | — | $-0, 0, 0$ |
| $764 \leq \sigma^2 < 996$ | 1 | $-3, 0, 3$ | $-5, 0, 5$ |
| $996 \leq \sigma^2 < 1737$ | 2 | $-3, 0, 3$ | $-6, 0, 6$ |
| $1737 \leq \sigma^2 < 3155$ | 3 | $-4, 0, 4$ | $-7, 0, 7$ |
| $3155 \leq \sigma^2 < DCT-Schw.$ | 4 | $-7, 0, 7$ | $-12, 0, 12$ |
| $DCT-Schw. \leq \sigma^2$ | | | DCT codierter Originalbildblock |

EP 0 368 139 B1

Die Adaption in vier Klassen erfordert es allerdings, diese Overhead-Informationen dem Empfänger mitzuteilen. Dies benötigt ca. 40 bit/Bild, kann also vernachlässigt werden. Alternativ könnten die Verteilungsdichtefunktionen durch verallgemeinerte Gaußfunktionen modelliert werden. Nach der Anpassung der Formfaktoren kann eine einmalige, optimale Bestimmung der Schwellen und Ersatzwerte erfolgen. Dadurch ist zwar keine nennenswerte Einsparung an Datenrate zu erzielen, die Struktur des Senders vereinfacht sich jedoch erheblich, was für eine Hardwarerealisierung wichtig ist. Die Auswahl der Quantisiererkennlinie erfolgt jeweils für einen 8x8 Punkte großen Bildblock und muß ebenfalls zusätzlich übertragen werden.

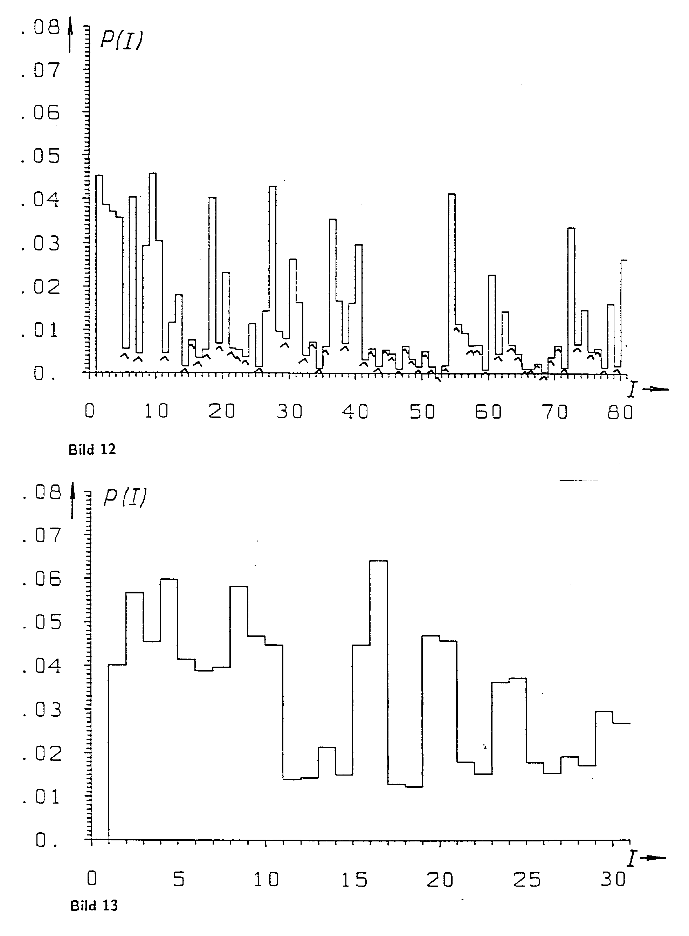

Zur Übertragung der dreiwertigen Bilder soll nun untersucht werden, ob sich bestimmte, besonders häufig vorkommende Muster herausbilden. Die Vorgehensweise kann als ein Sonderfall der Codebuchgenerierung für eine Vektorquantisierung angesehen werden: Aus einem feststehenden Codebuch, gegeben durch die Basisbilder der verwendeten Transformation, wird ein Untercodebuch der am häufigsten auftretenden Muster selektiert. Wegen der dreiwertigen Quantisierung und bei Untergliederung in hinreichend kleine Unterblöcke der Größe NxN Bildpunkte, kann wegen der begrenzten Anzahl der vorkommenden Möglichkeiten zunächst ein vollständiges Codebuch erstellt werden. Im Gegensatz zu Verfahren der Transformationscodierung, wo der Transformationsgewinn mit steigender Blockgröße zunimmt, bieten große Blöcke wegen der mangelnden Korrelation der Bildpunkte hier keine Vorteile. Die Verwendung kleinerer Blöcke bietet im Gegenteil den Vorteil, daß Blockstrukturen im Bild wegen der reduzierten Empfindlichkeit des menschlichen Sehapparates für höhere Ortsfrequenzen nicht oder nicht so leicht wahrgenommen werden. Ordnet man jedem Blocktyp ein Codewort zu, benötigt man $3^{NxN}$ Codeworte. Schon für N = 3 beträgt diese Zahl 19683, so daß für N nur der Wert 2 in Frage kommt. Die Auftrittshäufigkeit der nun möglichen 81 verschiedenen Blocktypen ist in Bild 12 dargestellt. Der Index der Typen berechnet sich wie folgt: Jede Position besitzt zunächst einen Code für die Lage innerhalb des 2x2 Blockes, 1 für links oben, 3 für rechts oben 9 für links unten und 27 für rechts unten. Diese Positionscodes werden mit einem Faktor für die Quantisiererersatzwerte (x1 für negative Ersatzwerte, x0 für Null-Ersatzwerte und x2 für positive Ersatzwerte) an den betreffenden Stellen multipliziert und das Ergebnis insgesamt aufaddiert. Beispiel: Ein Block der wie folgt quantisiert wurde $\begin{smallmatrix} \Delta \\ 0 \end{smallmatrix}$ . $\underline{0}$ erhält als Index die Zahl 29.

Selbst unter Ausnutzung der Verteilung der Auftritthäufigkeit durch Entropiecodierung ergibt sich eine Rate von 1,4 bit/Bildpunkt. Durch Eingrenzung der Typenvielfalt soll nun die erforderliche Rate vermindert werden, ohne große subjektive Qualitätseinbußen in Kauf nehmen zu müssen. Die in Bild 12 mit "Λ" markierten Blocktypen enthalten zugleich negative und positive Ersatzwerte. Ihre Auftrittshäufigkeit ist relativ gering. Überführt man diese Typen in Typen, welche nur positive und nur negative Ersatzwerte enthalten, kann die Zahl der möglichen Typen ohne wesentliche Qualitätseinbuße auf 31 gesenkt werden. Die Überfuhrung in andere Blocktypen geschieht nach den folgenden Regeln:

* Blöcke, die gleichviele positive und negative Ersatzwerte haben, werden durch Blöcke mit Index =0, d.h. nur Nullersatzwerte, repräsentiert.
* Blöcke, welche mehr positive als negative Ersatzwerte haben, werden durch positive und Nullersatzwerte dargestellt.
* Wie oben, aber für eine Überzahl negativer Ersatzwerte.

Durch diese Maßnahmen kann die Zieldatenrate von 0,8 bit/Bildpunkt erreicht werden. Bild 13 zeigt die Auftritthäufigkeit der verbleibenden 31 Blocktypen. Unter Verwendung eines Quadtrees innerhalb eines Update-Blockes der Größe 8x8 kann die Dominanz der Blocktypen mit ausschließlich Nullersatzwerten ausgenutzt und eine weitere Reduzierung der Datenrate erreicht werden.

Die oben dargelegten Untersuchungen lassen die Strukturcodierung für eine Verwendung in einem 64 kbit/s Coderkonzept geeignet erscheinen. Im folgenden sollen zunächst die Besonderheiten herausgestellt werden, die das hier gewählte Gesamtkonzept neben der Verwendung einer neuen Codierung gegenüber anderen Ansätzen auszeichnen:

* Es wird nicht das gesamte Fehlerbild zum Empfänger übertragen. Entsprechend der Wirksamkeit der Bewegungskompensation und der zur Verfügung stehenden Restdatenrate werden nur die Blöcke zum Empfänger übertragen (Update), welche das größte Fehlermaß aufweisen. Zur Signalisierung (= Overhead-Codierung) wird ein Quadtree verwendet.
* Es wird keine einheitliche Codierung des Restfehlersignals vorgenommen. An Hand des blockweisen Fehlermaßes wird die Wirksamkeit der Bewegungskompensation klassifiziert. Dabei ist es in Bereichen, wo die Bewegungskompensation versagt, zum Beispiel durch neue Bildteile, die in die Szene kommen, effektiver, einen DCT codierten Originalbildblock zum Empfänger zu übermitteln, als den Bereich durch Updates zu codieren.
* Das Coderkonzept verwendet keinen Puffer zur Erzielung einer konstanten Datenrate. Vielmehr wird für jeden Frame exakt die zur Verfügung stehende Rate ausgenutzt. Der Vorteil dieser Vorgehensweise ist neben der einfachen Struktur ohne Rückkopplung und Puffersteuerung vor allem die konstante Co-

7

dierqualität. Die konstante Codierqualität der als "Update" übertragenen Bildteile ist eine wichtige Voraussetzung für die Wirksamkeit der Prädiktion des nachfolgenden Bildes.

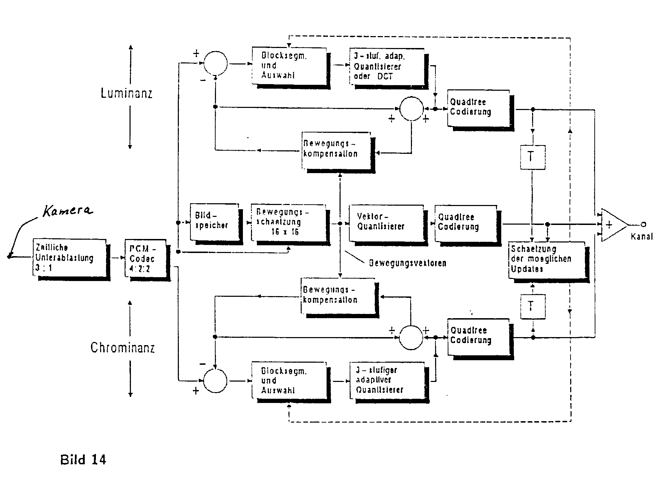

Das Coderkonzept ist in einem detaillierten Blockschaltbild in Bild 14 dargestellt. Einzelne Blöcke sollen im folgenden eingehender vorgestellt werden:

Mit Hilfe der Bewegungsvektoren für jeden Bildblock wird ein Schätzbild erstellt. Die Bewegungsvektoren werden nur aus der Luminanzinformation ermittelt, aber auch zur Kompensation der beiden Chrominanzkomponenten eingesetzt. Dies ist möglich, da Chrominanzänderungen ohne entsprechende Veränderungen in der Luminanz äußert selten sind. Durch Subtraktion des Originalbildes erhält man das Differenzbild. Für jeden Bildblock wird das Fehlermaß, mittlerer quadratischer Fehler (MQF), berechnet. Die Bewegungsvektorinformation wird vektorquantisiert. Die starke Dominanz von Null-Vektoren (mehr als 50 % typischerweise) verschlechtert die Möglichkeit einer Entropiecodierung der Bewegungsvektoren, da für den Nullvektor minimal 1 Bit übertragen werden muß. Deshalb wird eine Quadtree-Codierung der Bewegungsvektoren vorgenommen. Nach Abzug der für die Übertragung der Bewegungsvektoren erforderlichen Datenrate erhält man die Restdatenrate, die zur Codierung des Restfehlers zur Verfügung steht. Die Anzahl der mit dieser Restdatenrate übertragbaren Updateblöcke wird aus dem Codierergebnis des vorhergehenden Bildes geschätzt.

Mit Hilfe des MQF werden die Bildblöcke klassifiziert:

Type A: In Bildbereichen in denen keine Bewegung stattgefunden hat, oder die Bewegung in Form starrer Translation erfolgte, welche durch die Schätzung praktisch vollständig kompensiert werden konnte, erhält man ein sehr kleines Fehlermaß. Blöcke vom Typ A brauchen daher nicht weiter betrachtet zu werden.

Type B: Hier erfolgte die Bewegung nicht streng nach dem Modell starrer Translation. So konnte das Differenzsignal durch die Bewegungsschätzung weitgehend reduziert werden, es verbleiben jedoch Restfehler, welche ein Update des Blockes erforderlich machen. Diese Restfehler äußern sich im Fehlerbild vor allem durch linienhafte Konturen infolge Verformung der Objekte. Eine geeignete Strukturcodierung für diese Daten wurde oben vorgestellt.

Type C: Dadurch, daß sich Bildteile stark veränderten, oder neue Bildteile in die Szene kamen, konnte die Bewegungskompensation nicht erfolgreich arbeiten. Beispiele für derartige Bildbereiche sind freiwerdender Hintergrund, Öffnen/Schliessen der Augen/des Mundes, Hände/Arme die durch Gestik den Bildrand passieren. In all diesen Fällen besteht der Restfehler praktisch aus dem neuen Bildbereich, weist also die statistischen Eigenschaften eines natürlichen Bildes, wie zum Beispiel hohe örtliche Korrelation auf. Für diese Blöcke ist die Strukturcodierung weniger, die DCT jedoch sehr geeignet. Die Blöcke lassen sich einfach durch eine Schwellenoperation der Fehlervarianz detektieren. Man erhält bei Videotelefonsequenzen typischerweise 0 bis 8 Blöcke vom Typ C pro Bild. Nach Abzug der dafür benötigten Datenmenge verbleibt die Restdatenrate für die Codierung der Blöcke vom Typ B. Für die Chrominanzinformation wird nur in Blöcke vom Typ A oder Typ B unterschieden, also keine DCT auf Chrominanzblöcke angewendet.

Aus der für das vorherige Bild benötigten Datenmenge pro Update-Block wird die maximal mögliche Anzahl von Blöcken geschätzt, die ohne Überschreitung der pro Bild erlaubten Datenrate durch Strukturcodierung "upgedated" werden kann. Die Reihenfolge der Kandidaten-Blöcke wird durch den Betrag des Fehlermaßes bestimmt. Mit anderen Worten, die Blöcke, welche den größten Fehler aufweisen, werden bis zur Erreichung der maximalen Datenrate codiert übertragen. Damit ist sichergestellt, daß die Bildqualität jeweils das mögliche Optimum darstellt. Bei geringerem Bewegungsanteil finden sofort auch Blöcke mit kleinerem Fehlermaß Beachtung, so daß die Qualität wieder ansteigt. Dieser Automatismus befindet sich in Übereinstimmung mit dem visuellen System des Menschen. Man unterscheidet beim menschlichen visuellen System ein sogenanntes "transient system" und ein "sustained system". Das "transiente system" ermöglicht die Erfassung schneller Bewegungen auf Kosten der Orts- und Amplitudenauflösung. Das "sustained system" kann auch Bildteile fokussieren und höchste Detailinformation liefern. Zu beachten ist allerdings, daß bei langsamen Bewegungen, denen das Auge durch Ausgleichsbewegungen folgen kann, das sustained System dominiert. Ein weiterer Vorteil der Coderstruktur liegt in der Verwendbarkeit des gleichen Algorithmus zur Übertragung von hochaufgelösten Standbildern. Sobald die Bewegungsvektoren Null werden, steht durch die Quadtree Codierung die gesamte Datenrate für Updates zur Verfügung. Dadurch wird schnell die höchstmögliche Auflösung erreicht.

Entsprechend dem oben vorgestellten Algorithmus und der Anzahl der möglichen Update-Blöcke wird eine Klasseneinteilung innerhalb der für die Übertragung ausgewählten Blöcke vom Typ B vorgenommen. Die Klassengrenzen werden dabei so gewählt, daß ungefähr die gleiche Anzahl von Blöcken in jede der vier Klassen fallen. Die Bestimmung der Ersatzwerte erfolgt nach den Regeln der Quantisierung mit minimalem Fehler durch Berechnung der Verteilungsdichtefunktion und der optimalen Ersatzwerte für jedes Bild neu. Dadurch wird ein progressiver Bildaufbau mit zunächst großen und dann immer kleiner werdenden Ersatzwerten erzielt.

Es wird demnach in Abhängigkeit von der Klassifizierung eine adaptive Grobquantisierung der Restfehlerbildpunktamplituden vorgenommen, wobei die Quantisierungsparameter durch die Klassifizierung gesteuert werden.

Die Signalisierung, welche Blöcke übertragen werden, erfolgt mit Hilfe eines Quadtrees, der neben der Information keine Übertragung/Übertragung durch DCT/Übertragung durch Strukturcodierung auch die Klasseninformation für den letzten Fall beinhaltet. Für die Overhead-Information wird zur Ausnutzung der Verteilung ein Huffmann-Code verwendet. Es ergeben sich folgende Codeworte:

| Ereignis | Codewort | Darstellung in Bild 15 |
|---|---|---|
| kein Update | 0 | ' ' |
| Strukturcodierung Klasse 1 | 100 | '0' |
| Strukturcodierung Klasse 2 | 101 | '1' |
| Strukturcodierung Klasse 3 | 110 | '2' |
| Strukturcodierung Klasse 4 | 1110 | '3' |
| Codierung mit DCT | 1111 | ' ' |

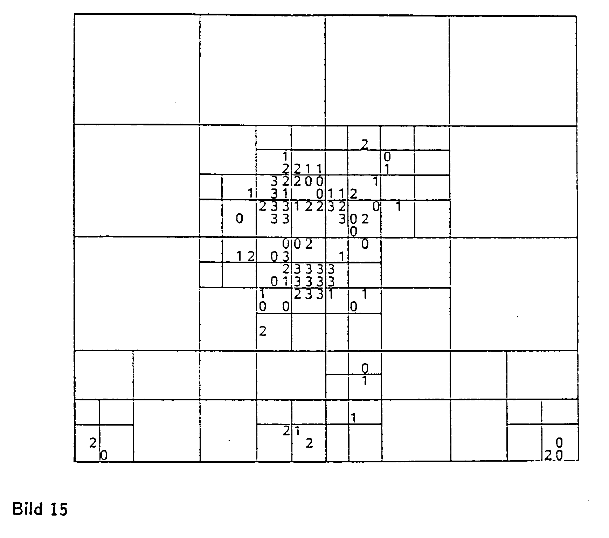

Ein zweiter Quadtree wird für die Chrominanz gebildet. Bild 15 zeigt die Zerlegung der Signalisierungsinformation des Bildfeldes wie sie durch einen Quadtree vorgenommen wird. Typischerweise werden für Anzeige und Klassifizierung der Blöcke, also die sogenannte Ortsinformation, ungefähr 300 Bits pro Frame für die Luminanz und 250 Bits für beide Chrominanzkomponenten benötigt.

## Patentansprüche

1. Verfahren zur Aufbereitung eines codierten Restfehlersignals, insbesondere für die Übertragung codierter Bildsequenzen, welches durch die Subtraktion eines durch Berechnung von Bewegungsvektoren und entsprechender Verschiebung von Teilbildbereichen des vorangegangenen Bildes erzeugten Schätzbildes vom aktuellen Bild gebildet wird, und die Unzulänglichkeit der Beschreibung des aktuellen Bildes durch das Schätzbild ausdrückt, wobei in Abhängigkeit des bei einer vorangegangenen Bewegungskompensation verbleibenden Restfehlers eine lokale Klassifizierung anhand des Fehlermaßes des Restfehlers von Bildblöcken erfolgt, wobei in Abhängigkeit von der Klassifizierung bezüglich des Fehlermaßes des Restfehlers eine adaptive Grobquantisierung der Bildpunktamplituden des Restfehlerbildes vorgenommen wird und wobei die Quantisierungsparameter für die Restfehlerbildpunktamplituden durch das Fehlermaß bei der Klassifizierung gesteuert werden und wobei eine umso gröbere Quantisierung gewählt wird, je höher das Fehlermaß des Restfehlers ist.

2. Verfahren nach Anspruch 1, dadurch gekennzeichnet, daß nach der Grobquantisierung des Restfehlersignals Strukturblöcke gebildet werden, die aus Gruppen von quantisierten Bildpunkten bestehen.

3. Verfahren nach Anspruch 2, dadurch gekennzeichnet, daß die Strukturblöcke mit einem Satz vorgegebener Strukturmuster verglichen werden, die von allen möglichen Strukturmustern jene Muster repräsentieren, die am häufigsten auftreten und daß jeweils jenes Muster als das bestgeeignete ausgewählt wird, welches zu einem der vorgegebenen Strukturmuster die größte Ähnlichkeit aufweist.

4. Verfahren nach Anspruch 1, dadurch gekennzeichnet, daß in Abhängigkeit von der lokalen Leistung des Restfehlersignals (= Restfehlerleistung), d.h. der Leistung des Restfehlersignals bezüglich eines Bildblocks, oder eines anderen geeigneten Kriteriums für das Fehlermaß des Restfehlers eine Auswahl der Teilbildbereiche des Restfehlerbildes getroffen wird und daß eine Signalisierung der ausgewählten Teilbildbereiche über eine hierarchische Baumstruktur (Quadtree) codiert wird.

5. Verfahren nach Anspruch 1 oder 4, dadurch gekennzeichnet, daß in Abhängigkeit von der lokalen Leistung des Restfehlersignals (= Restfehlerleistung) oder eines anderen geeigneten Kriteriums für das Fehlermaß des Restfehlers eine Auswahl von Teilbildbereichen des Restfehlerbildes getroffen wird, die durch besonders hohe Fehlerleistung charakterisiert ist, und daß diese Bereiche so aufbereitet werden, daß diese als eine codierte Übertragung von Teilbildbereichen des Originalbildes an gleicher Position wie die im Restfehlerbild detektierten Teilbildbereiche erscheinen.

**6.** Verfahren nach Anspruch 1 oder 4, dadurch gekennzeichnet, daß in Abhängigkeit von der lokalen Leistung des Restfehlersignals (= Restfehlerleistung) oder eines anderen geeigneten Kriteriums für das Fehlermaß des Restfehlers eine Rangfolge der Teilbildbereiche bzw. der ausgewählten Teilbildbereiche vorgenommen wird und daß die Codierung der Teilbildbereiche entsprechend dieser Rangfolge so erfolgt, daß zuerst jene Teilbildbereiche codiert werden, die das größte Fehlerinaß aufweisen.

**7.** Verfahren nach Anspruch 1, dadurch gekennzeichnet, daß die Grobquantisierung der Bildpunktamplituden des Restfehlerbildes derart vorgenommen wird, daß bei der Quantisierung nur drei Ausgangszustände erhalten werden - sogenannte dreiwertige Quantisierung - und daß diese drei Ausgangszustände zur Beschreibung von positiven, negativen und nahe bei Null liegenden Bildpunktamplituden des Restfehlerbildes verwendet werden.

**8.** Verfahren nach Anspruch 7, dadurch gekennzeichnet, daß die Quantisierungsparameter der dreiwertigen Quantisierung, nämlich die Ersatzamplituden für positive und negative Bildpunktamplituden des Restfehlerbildes sowie die Amplitudengrenze zur Erzeugung der Null-Ausgangsamplitude des Quantisierers adaptiv in Bezug auf das gerade zu codierende Restfehlerbild hin gewählt werden, derart, daß der durch die dreiwertige Quantisierung bewirkte Quantisierungsfehler im Mittel über das zu codierende Bild minimal wird.

**9.** Verfahren nach Anspruch 7 oder 8, dadurch gekennzeichnet, daß die lokale Klassifizierung dazu verwendet wird, die Quantisierungsparameter bei der dreiwertigen Quantisierung, nämlich die Ersatzamplituden für positive und negative Bildpunktamplituden des Restfehlerbildes und die Amplitudengrenze zur Erzeugung der Null-Ausgangsamplitude des Quantisierers, an die lokalen Eigenschaften des Restfehlerbildes anzupassen, indem in Abhängigkeit von der Klassifizierung eine Verwendung unterschiedlicher Quantisierungsparameter erfolgt.

**10.** Verfahren nach Anspruch 7 oder 9, dadurch gekennzeichnet, daß die Klassifizierung in vier voneinander unterschiedlichen Klassen vorgenommen wird, wobei die Klassenunterteilung anhand des Fehlermaßes des Restfehlers von Bildblöcken erfolgt und daß zur dreiwertigen Quantisierung der Bildpunktamplituden des Restfehlerbildes vier verschiedene von dieser Klassenunterteilung abhängige Quantisierungsparameter herangezogen werden.

**11.** Verfahren nach Anspruch 2, 3 oder 7, dadurch gekennzeichnet, daß jeweils vier quantisierte Bildpunkte des dreiwertig quantisierten Restfehlersignales zu einem Strukturblock zusammengefaßt werden.

## Claims

**1.** Method for the preparation of a coded residual error signal, in particular for the transmission of coded image sequences, which is formed by the subtraction of an estimated image, which is produced by computation of movement vectors and corresponding displacement of partial image regions of the preceding image, from the actual image and expresses the inadequacy of the description of the actual image by the estimated image, wherein a local classification takes place with the aid of the degree of error of the residual error of image blocks, in dependence on the residual error remaining on a preceding movement compensation, wherein an adaptive coarse quantisation of the image dot amplitudes of the residual error image is undertaken in dependence on the classification in respect of the degree of error of the residual error and wherein the quantisation parameters for the residual error image dot amplitudes are controlled by the degree of error in the classification and wherein a quantisation is chosen, which is the coarser, the higher is the degree of error of the residual error.

**2.** Method according to claim 1, characterised thereby, that structure blocks, which consist of groups of quantised image dots, are formed after the coarse quantisation of the residual error signal.

**3.** Method according to claim 2, characterised thereby, that the structure blocks are compared with a set of given structure patterns, which of all possible structure patterns represent those patterns which occur most frequently and that always that pattern is chosen to be the most suitable, which displays the greatest similarity to one of the given structure patterns.

**4.** Method according to claim 1, characterised thereby, that a selection of the partial image regions of the residual error image is made in dependence on the local power of the residual error signal (= the residual error power), i.e. the power of the residual error signal in respect of an image block, or another suitable criterion for the degree of error of the residual error and that a signalling of the selected partial image regions is coded by way of an hierarchical tree structure (quad tree).

5. Method according to claim 1 or 4, characterised thereby, that a selection of the partial image regions of the residual error image, which selection is characterised by particularly high error power, is made in dependence on the local power of the residual error signal (= the residual error power) or another suitable criterion for the degree of error of the residual error and that these regions are so prepared that these appear as a coded transmission of partial image regions of the original image at the same position as the partial image regions detected in the residual error image.

6. Method according to claim 1 or 4, characterised thereby, that a priority ranking of the partial image regions or of the selected partial image regions is undertaken in dependence on the local power of the residual error signal (= the residual error power) or another suitable criterion for the degree of error of the residual error and that the coding of the partial image regions so takes place in accordance with this priority ranking that those partial image regions, which display the greatest degree of error, are coded first.

7. Method according to claim 1, characterised thereby, that the coarse quantisation of the image dot amplitudes of the residual error image is undertaken in such a manner that only three output states are obtained during the quantisation - so-called trivalent quantisation - and that these three output states are used for the description of image dot amplitudes of the residual error image, which are positive, negative and lying close to zero.

8. Method according to claim 7, characterised thereby, that the quantisation parameters of the trivalent quantisation, namely the substitute amplitudes for positive and negative image dot amplitudes of the residual error image as well as the amplitude limit for the production of the zero output amplitude of the quantiser are chosen adaptively with reference to the residual error image just to be coded and in such a manner that the quantisation error caused by the trivalent quantisation becomes minimal in the mean over the image to be coded.

9. Method according to claim 7 or 8, characterised thereby, that the local classification is used for adapting the quantisation parameters for the trivalent quantisation, namely the substitute amplitudes for positive and negative image dot amplitudes of the residual error image as well as the amplitude limit for the production of the zero output amplitude of the quantiser, to the local properties of the residual error image in that a use of different quantisation parameters takes place in dependence on the classification.

10. Method according to claim 7 or 9, characterised thereby, that the classification is undertaken into four classes which differ one from the other, wherein the subdivision of the classes takes place with the aid of the degree of error of the residual error of image blocks and that four different quantisation parameters dependent on this subdivision of the classes are drawn upon for the trivalent quantisation of the image dot amplitudes of the residual error image.

11. Method according to claim 2, 3 or 7, characterised thereby, that four quantised image dots of the trivalently quantised residual error signal are combined each time into one structure block.

**Revendications**

1. Procédé de préparation d'un signal d'erreur résiduelle codé, en particulier pour la transmission des séquences d'image codées, qui se forme en soustrayant de l'image actuelle une image estimée produite par le calcul de vecteurs de déplacement et par le glissement correspondant de zones partielles de l'image précédente, et qui exprime l'insuffisance de la description de l'image actuelle par l'image estimée, procédé dans lequel il se fait, en fonction de l'image résiduelle subsistant lors d'une compensation de déplacement précédente, une classification locale à l'aide de la valeur mesurée de l'erreur résiduelle provenant des blocs d'image, dans lequel, en fonction de la classification relative à la valeur mesurée de l'erreur résiduelle, on procède à une numérisation grossière adaptative des amplitudes d'élément d'image de l'image comportant des erreurs résiduelles et dans lequel les paramètres de numérisation pour les amplitudes des éléments d'image comportant les erreurs résiduelles sont commandés par la valeur mesurée de l'erreur lors de la classification et dans lequel on choisit une numérisation d'autant plus grossière que la valeur mesurée de l'erreur résiduelle est plus élevée.

2.   Procédé selon la revendication 1, caractérisé par le fait qu'après la numérisation grossière du signal d'erreur résiduelle se forment des blocs de structure qui sont constitués de groupes d'éléments d'image numérisés.

3.   Procédé selon la revendication 2, caractérisé par le fait que l'on compare les blocs de structure avec un ensemble de modèles de structure prescrits qui, parmi tous les modèles de structure possibles, représentent ceux qui surviennent le plus fréquemment, et par le fait que l'on choisit chaque fois comme modèle convenant le mieux celui qui présente la plus grande ressemblance avec l'un des modèles de structure prescrits.

4.   Procédé selon la revendication 1, caractérisé par le fait qu'en fonction de la valeur locale du signal d'erreur résiduelle (= valeur de l'erreur résiduelle) c'est-à-dire de la valeur du signal d'erreur résiduelle relativement à un bloc d'image, ou en fonction d'un autre critère approprié pour la valeur mesurée de l'erreur résiduelle, il se produit un choix des zones d'image partielle de l'image comportant des erreurs résiduelles et par le fait qu'une signalisation des zones d'image partielle choisies est codée au moyen d'une structure arborescente hiérarchisée (Quadtree).

5.   Procédé selon la revendication 1 ou 4, caractérisé par le fait qu'en fonction de la valeur locale du signal d'erreur résiduelle (= valeur de l'erreur résiduelle) ou d'un autre critère approprié pour la valeur mesurée de l'erreur résiduelle il se fait un choix des zones d'image partielle de l'image comportant des erreurs résiduelles, choix qui se caractérise par une valeur particulièrement élevée de l'erreur et par le fait que l'on prépare ces zones de façon que celle-ci, en tant que transmission codée de zones d'image partielle de l'image originale, apparaissent à la même position que les zones d'image partielle détectées dans l'image comportant les erreurs résiduelles.

6.   Procédé selon la revendication 1 ou 4, caractérisé par le fait qu'en fonction de la valeur locale du signal d'erreur résiduelle (= valeur de l'erreur résiduelle) ou d'un autre critère approprié pour la valeur mesurée de l'erreur résiduelle, on procède à un classement, par priorité, des zones d'image partielle ou des zones d'image partielle choisies et par le fait que le codage des zones d'image partielle se fait en fonction de ce classement par priorité de sorte que ce sont tout d'abord les zones d'image partielle qui présentent la plus grande valeur mesurée de l'erreur qui sont codées.

7.   Procédé selon la revendication 1, caractérisé par le fait que l'on procède à la numérisation grossière des amplitudes d'image partielle de l'image comportant des erreurs résiduelles de façon telle que lors de la numérisation, on n'obtient que trois états de sortie - dite numérisation en trois état - et par le fait que l'on emploie ces trois états de sortie pour décrire des amplitudes positives, négatives et presque nulles d'éléments d'image de l'image comportant des erreurs résiduelles.

8.   Procédé selon la revendication 7, caractérisé par le fait que l'on choisit les paramètres de la numérisation en trois états, c'est-à-dire les amplitudes de remplacement pour les amplitudes positives et négatives des éléments d'image de l'image comportant les erreurs résiduelles, ainsi que la limite d'amplitude pour la production de l'amplitude de sortie nulle de l'organe de numérisation de façon adaptative en ce qui concerne l'image, comportant les erreurs résiduelles, qui est justement à coder, de façon telle que l'erreur de numérisation opérée par la numérisation en trois états soit minimale en moyenne prise sur l'image à coder.

9.   Procédé selon la revendication 7 ou 8, caractérisée par le fait que l'on emploie la classification locale pour adapter aux caractéristiques locales de la classification les paramètres de numérisation dans le cas de la numérisation en trois états, c'est-à-dire les amplitudes de remplacement pour les amplitudes positives et négatives des éléments d'image de l'image comportant les erreurs résiduelles et la limite d'amplitude pour la production de l'amplitude de sortie nulle de l'organe de numérisation, en ce sens qu'en fonction de la classification il se fait un emploi des différents paramètres de numérisation.

10.  Procédé selon la revendication 7 ou 8, caractérisé par le fait que l'on procède à la classification en quatre classes différentes l'une de l'autre, la répartition par classes se faisant à l'aide de la valeur mesurée de l'erreur résiduelle des blocs d'image et par le fait que pour la numérisation en trois états des amplitudes des éléments d'image de l'image comportant des erreurs résiduelles, on fait appel à quatre paramètres de numérisation différents dépendant de cette répartition par classes.

11. Procédé selon la revendication 2, 3 ou 7, caractérisé par le fait que l'on regroupe chaque fois quatre éléments d'image numérisés du signal d'erreur résiduelle numérisé en trois états pour obtenir un bloc de structure.

Bild 1

Bild 2

14

Bild 3

$log\ var(\underline{x}_i)$

**Bild 4**

$$\frac{\overset{i}{\sum} var(\underline{x}_i)}{var_{ges}}$$

**Bild 5**

**Bild 6**

**Bild 7**

**Bild 8**

**Bild 9**

**Bild 10**

Bild 11

Bild 12

Bild 13

21

Bild 14

Bild 15